# EUROPEAN PATENT SPECIFICATION

(11) **EP 4 528 098 B1**
(45) Date of publication and mention of the grant of the patent: **13.05.2026**
(21) Application number: 24192020.6
(22) Date of filing: 31.07.2024
(51) Int. Cl.: F03B 3/06, F03B 3/12, F03B 13/00

(54) **PRESSURE REDUCTION STATION FOR A HYDRAULIC NETWORK**
DRUCKABBAUSTATION FÜR EIN HYDRAULISCHES NETZWERK
STATION DE RÉDUCTION DE PRESSION POUR UN RÉSEAU HYDRAULIQUE

(30) Priority: 25.09.2023 IT 202300019722
(43) Date of publication of application: 26.03.2025
(73) Proprietor: T.I.S. Service S.p.A., 24060 Bolgare (BG) (IT)
(72) Inventor: ROTA, Fortunato, 24060 BOLGARE (BG) (IT)
(74) Representative: Lunati & Mazzoni S.r.L.

(56) References cited:
- WO-A1-2014/012150
- JP-A- 2002 242 811
- US-A1- 2009 236 852
- US-A1- 2011 233 933

## Description

This invention relates to a pressure reduction station for a hydraulic network of the type specified in the preamble of the first claim.

In particular, this invention relates to a pressure reduction station for a hydraulic network that allows the water flow within the network to be stabilised, especially by avoiding large pressure surges.

A similar station is described in patent application WO 2014/012150 A1.

As is well known, there are numerous in-line pressure reduction points in aqueduct networks, which are necessary so that the water reaches the end user with a controlled flow and pressure.

To this end, a pressure control valve is installed at each reduction point, whose function is basically to dissipate excess pressure, and thus energy. This 'excess' is potentially convertible into electricity that can be directly exploited or sold to the electricity grid operator.

At present, this potential has already been at least partially exploited by installing at these points expensive, custom-built hydraulic turbines or pumps, which, installed in place of the turbine, have an inverse function to the conventional operation of commercial pumps and only achieve very low efficiencies.

Although solutions involving the adoption of a turbine at the reduction points allow higher efficiencies to be achieved during certain operating transients, these solutions have, like pump solutions, the great disadvantage of having a significant impact on hydraulic networks, as they can cause impulsive phenomena, such as 'water hammers', which are potentially destructive to the piping.

In this situation, the technical task underlying this invention is to devise a pressure reduction station for a hydraulic network capable of substantially overcoming at least part of the aforementioned drawbacks.

In the context of said technical task, it is an important purpose of the invention to obtain a pressure reduction station for a hydraulic network which allows drastically reducing the formation of impulsive phenomena such as water hammers.

Therefore, another important purpose of the invention is to achieve a pressure reduction station for a hydraulic network which allows to reduce the wear and the possibility of breakage of the pipes composing the hydraulic network.

In conclusion, a further purpose of the invention is to realise a pressure reduction station for a hydraulic network allowing to stabilise the pressure of the fluid arriving at the users.

The specified technical task and purposes are achieved by a pressure reduction station for a hydraulic network as claimed in the annexed claim 1.

Preferred embodiments are highlighted in the dependent claims.

The characteristics and benefits of the invention will be clarified in the following detailed description of some preferred embodiments of the invention, with reference to the accompanying drawings, wherein:
**Fig. 1** shows a longitudinal cross-section view of a Kaplan turbine according to the invention;
**Fig. 2** shows a perspective view of a first embodiment of a Kaplan turbine blade according to the invention;
**Fig. 3** is a side view of the blade in Fig. 2;
**Fig. 4** shows a perspective view of a second embodiment of a Kaplan turbine blade according to the invention;
**Fig. 5** shows a perspective view of a pressure reduction station for hydraulic network according to the invention;
**Fig. 6** shows a top view of a pressure reduction station for hydraulic network according to the invention;

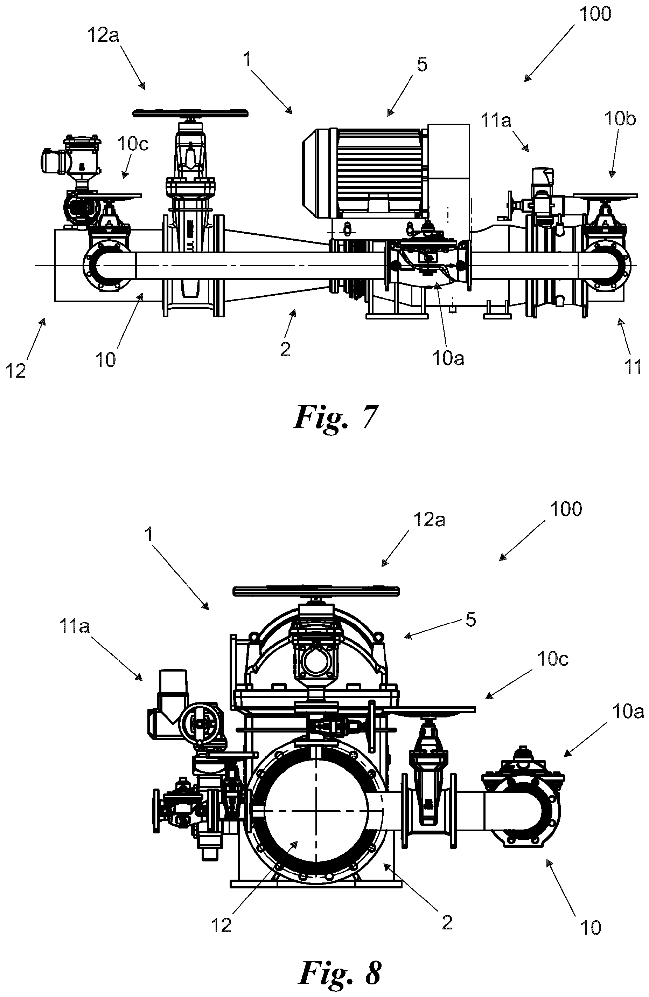

**Fig. 7** is a side view of a pressure reduction station for hydraulic network according to the invention; and
**Fig. 8** shows a front view of a pressure reduction station for hydraulic network according to the invention.

In this document, when measurements, values, shapes, and geometric references (such as perpendicularity and parallelism) are associated with words like "approximately" or other similar terms, such as "almost" or "substantially", they shall be understood as except for errors of measurement or imprecisions due to errors of production and/or manufacturing and, above all, except for a slight departure from the value, measurement, shape, or geometric reference with which it is associated. For example, if associated with a value, such terms preferably indicate a departure of no more than 10% of the value itself.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as reflected in the following discussions, terms such as "processing", "computing", "determination", "computation", or the like are considered to refer to the action and/or processes of a computer or similar electronic computing device that manipulates and/or transforms data represented as physical, such as electronic quantities of records of a computer system and/or memories, in other data similarly represented as physical quantities within computer systems, records, or other information storage, transmission, or display devices.

Unless otherwise stated, the measurements and data reported in this text shall be considered as performed in International Standard Atmosphere ICAO (ISO 2533:1975).

With reference to the figures, the Kaplan turbine according to the invention is globally indicated with the number **1.**

The turbine 1 has, in itself, many features in common with conventional Kaplan turbines, with some important differences.

Thus, the turbine 1 comprises, in summary, at least a body **2,** means of deflection **3** and a propeller **4.**

The body 2 is essentially a tubular element. Thus, the body 2 defines a closed and accessible structure through which a fluid, preferably a liquid, can flow.

In particular, preferably, the body 2 defines a development axis **2a.** The development axis 2a defines at least part of the overall development trajectory of the body 2. Therefore, the body 2 defines at least a portion having a straight axis which determines, precisely, the development axis 2a. Of course, more generally, the body 2 can also develop along a circular trajectory before developing along development axis 2a. It is not unusual that in common Kaplan turbines the inlet portion of the body may include a circular path through which the fluid passes before reaching the deflectors and then the propeller.

In any case, at least part of body 2 defines a development axis 2a along which a flow of fluid is conveyed.

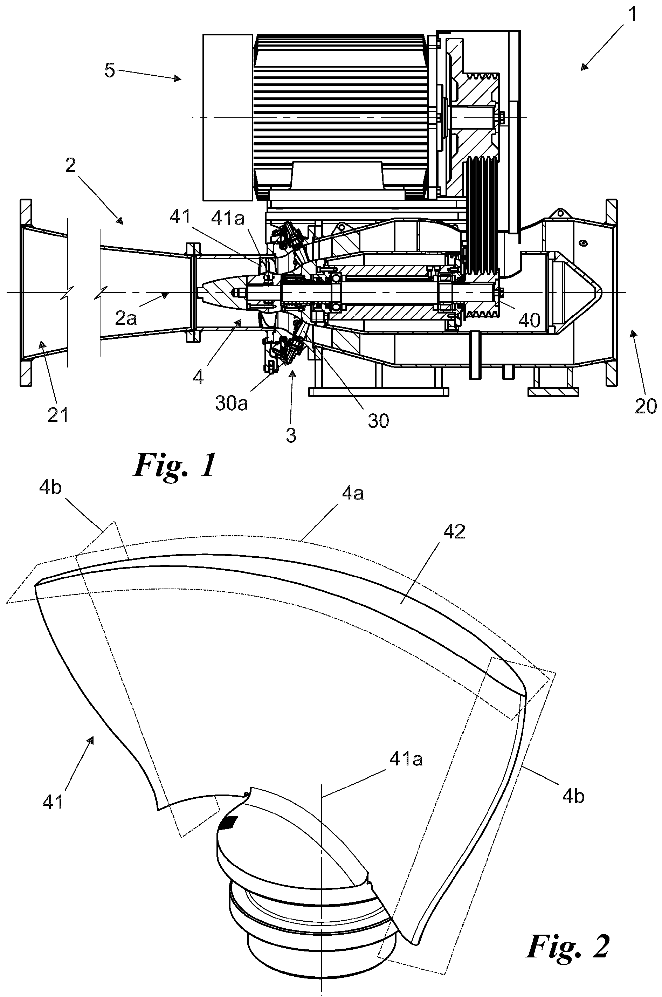

In a preferred embodiment, as shown in Fig. 2, the turbine 1 is of axial type and therefore the body 2 is developed entirely along the development axis 2a. Furthermore, in general, body 2 includes an inlet **20** and an outlet **21.**

Inlet 20 is, of course, the portion of body 2 through which fluid can enter body 2 itself and can thus interact with turbine 1.

Outlet 21 is the portion of body 2 through which fluid can exit body 2 itself once the fluid has interacted with turbine 1.

Both inlet 20 and outlet 21 are, in addition, preferably available in fluid passage connection with a hydraulic network **101.** The hydraulic network 101 is preferably external to the turbine 1. Thus, the hydraulic network 101 may comprise, for example, the network of an aqueduct, e.g. a city aqueduct, through which water may be conveyed and sorted between different users.

The deflection means 3 are positioned on the body 2.

Furthermore, the deflection means 3 preferably include a plurality of deflectors **30.** The deflectors 30 are of the stator type. Thus, the deflectors 30 are connected to the body 2 and are designed to direct the fluid.

In particular, the deflectors 30 are configured to deflect the fluid, i.e. to vary or control its flow direction from the inlet 20 towards the outlet 21.

Thus, preferably, the deflectors 30 are distributed around the development axis 2a. In a preferred, but not exclusive, embodiment, the deflectors 30 are loosely connected to the body 2 and can therefore vary their orientation with respect to it. In even more detail, preferably, the deflectors are configured to rotate simultaneously, i.e. all together, about a respective orientation axis **30a.** The orientation axis 30a is preferably parallel to said development axis 2a. Therefore, the deflectors 30 preferably include flaps developed along a respective orientation axis 30a and tiltable with respect to the body 2 by rotating about said orientation axis 30a.

Preferably, the deflectors 30, by rotating about the orientation axis, can vary in flow rate and/or pressure the flow of fluid entering the propeller 4. Indeed, preferably, the latter is arranged downstream of the means of deflection 3.

Therefore, in general, as is the case in many Kaplan turbines of the prior art, the deflectors 30 are able to increase or reduce the inlet space to the body 2 section housing the propeller 4 to increase or reduce the fluid flow rate or to reduce or increase, for example, the dynamic pressure of the fluid transiting between the means of deflection 3.

On the other hand, the propeller 4 is configured to rotate about the development axis 2a relative to the fluid flow. Of course, the propeller 4 may passively move in response to the fluid flow, or it may actively move the fluid itself by varying in flow rate and/or pressure the fluid flow exiting the propeller 4.

The propeller 4 includes, therefore, at least one shaft **40.**

The shaft 40 is essentially an elongated element capable of rotating about its own central axis. Preferably, the shaft 40 is developed along the development axis 2a. Therefore, it is capable of rotating around the development axis 2a.

The propeller 40 comprises, therefore, a plurality of blades **41.**

The blades 41 are essentially the elements of propeller 4 that interact directly with the fluid flow. Therefore, the blades 41 together form a rotor. The latter is, of course, integral at least axially along the development axis 2a to the shaft 40.

Thus, the blades 41 are the elements that can push the shaft 40 by virtue of the movement imparted to them by the fluid flow or can direct and push the fluid by virtue of a rotary movement around the development axis 2a imparted by the shaft 40.

In any case, preferably, the blades 41 are distributed around the development axis 2a. Furthermore, they are connected to the shaft 40. The blades 41 may be integral with the shaft 40 and thus be statically bound to it.

Or, the blades 41 may be loosely connected to the shaft 40. In the latter case, the blades 41 are preferably configured to rotate simultaneously, i.e. all together, about a respective inclination axis **41a.**

The inclination axis 41a is preferably radial to the development axis 2a, i.e. normal to it. Thus, similarly to what has been described for the deflectors 30, by varying their inclination with respect to the inclination axis 41a, the blades 41 may overall vary in flow rate and/or pressure the flow of fluid.

This is one of the ways in which the propeller 4 is able to determine variations in fluid flow. Of course, variations in fluid flow can also be actively caused by the propeller 4 if the latter is moved.

Preferably, each blade 41 defines a particular shape.

In particular, each blade 41 preferably fans out radially to the development axis 2a. This means that, with respect to the development axis 2a, the blade 41 defines a section, in a virtual plane normal to the development axis 2a, having a shape similar to a circular crown sector. Thus, the blade 41 fans out from a base area **41a** to an end area **41b.**

The base area 41a is essentially the blade zone adjacent to the shaft 40. Therefore, it is the area at which the blade 41 is connected, loosely or not, to the shaft 40. The end area 41b, on the other hand, is the boundary zone of the blade 41, i.e. opposite the base area 41a radially to the development axis 2a.

The blade 41 thus defines a plurality of profiles **42.**

The profiles 42 are sectional airfoils that are formed on the blade 41 from the base area 41a to the end area 41b. In addition, the profiles 42 are formed on development surfaces **4a.**

The development surfaces 4a preferably extend around the development axis 2a and are therefore parallel to the development axis 2a.

The profiles 42, of course, develop incrementally along the blade 41 in such a way as to determine the divergent, i.e. fan-like, shape starting from the base area 41a of the blade 41.

The profiles 42 may develop reciprocally radially aligned with the development axis 2a. Or, the profiles 42 may be mutually warped radially to the development axis 2a. Advantageously, each of the blades 41 defines a particular shape.

In fact, preferably, each of the blades 41 is developed radial to the development axis 2a in a gull-wing shape. This conformation is determined by the fact that each blade 41 defines at least a double curvature in each longitudinal plane 4b; each longitudinal plane 4b develops radially and along the development axis 2a.

Thus, the blade 41 substantially defines a range of longitudinal planes 4b along which it defines an at least double curvature profile.

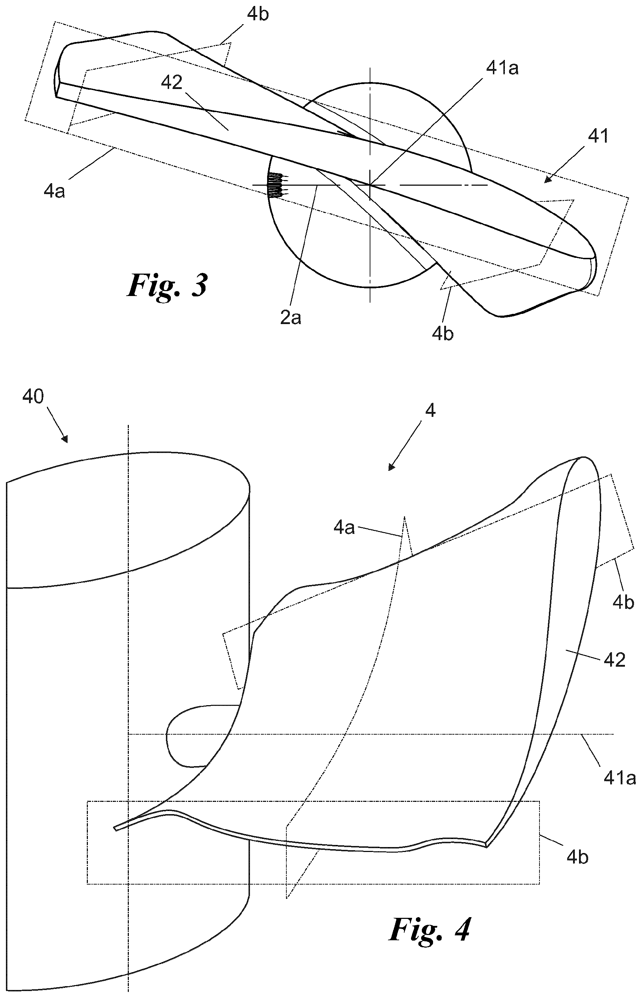

Even more in detail, preferably each of the blades 41 defines a triple curvature along at least part of the longitudinal planes 4b, as shown explicitly in Figs. 2 and 4. Preferably, the turbine 1 is also configured to recover at least part of the mechanical energy developed by the fluid flow.

Thus, preferably, the turbine 1 also comprises an alternator **5.**

The alternator 5 is operatively connected to the shaft 40. Furthermore, the alternator 5 is configured to convert the mechanical energy determined by the motion of the shaft 40 into electrical energy. Of course, the shaft 40 could also be operatively connected to an electric motor capable of actively moving the shaft 40.

In any case, the shaft 40 is at least connected to the alternator 5 in such a way as to passively generate electrical energy. Preferably, the alternator 5 is an electric generator. Even more preferably, the generator is of the asynchronous type.

In addition to all the mechanisms, per se known, for enabling the movement of the movable surfaces, i.e. in particular the deflectors 30 and blades 41, the turbine 1 may comprise control means.

If present, the control means are operatively connected to at least blades 41 and deflectors 30. Thus, the control means are preferably configured to rotate the blades 41 about the respective inclination axis 41a in proportion to a rotation of the deflectors 30 about the respective orientation axis 30a or vice versa. This control configuration can be achieved by interfacing the various previously mentioned movable surface movement mechanisms.

For example, the control means may comprise one or more electromechanical actuators.

The turbine 1 thus constructed may be implemented in whole or in part within a new pressure reduction station for a hydraulic network.

The station may be a common station present at a pressure reduction point of a hydraulic network 101.

Or, the station may be an innovative station in itself.

With reference to the Figures, the pressure reduction station for hydraulic network according to the invention is globally referred to as 100.

The station 100 comprises, as mentioned above, at least one Kaplan turbine. The Kaplan turbine may be of the conventional type or of the type described above. Preferably, but not necessarily, the station 100 comprises the turbine 1.

In addition, the station 100 further comprises the hydraulic network 101. Preferably, the latter comprises at least one inlet duct **11** and one outlet duct **12.** The inlet duct 11 is preferably in fluid passage connection with the inlet 20. The outlet duct 12 is, on the other hand, preferably in fluid passage connection with the outlet 21.

Advantageously, the station 100 is configured in a particular manner.

In fact, the station 100 also comprises an auxiliary duct **10.**

The auxiliary duct 10 is in fluid passage connection with the inlet and outlet ducts 11, 12. Therefore, the auxiliary duct 10 is positioned in the hydraulic network 101 parallel to the turbine 1.

The auxiliary duct 10 advantageously also includes a bypass valve **10a.**

The bypass valve 10a is substantially configured to be actuated in proportion to changes in fluid flow imposed by the turbine 1. Further, even more in detail, the bypass valve 10a is configured to maintain, when actuated, flow and/or pressure surges determined by the fluid flow variations imposed by the turbine 1 within predetermined limit values.

Thus, the purpose of the bypass valve 10a is to stabilise the flow of fluid exiting, in total, from the station 100 so that it can flow to the various utilities without jumps whose effect may be, for example, the so-called water hammers.

The bypass valve 10a may, in particular, be a hydro-valve. Or, the bypass valve 10a may be a needle valve.

Furthermore, the auxiliary duct 10 may also comprise a first isolation gate valve **10b.** If present, the first isolation gate valve 10b is arranged upstream of the bypass valve 10a. Thus, the first isolation gate valve 10b is substantially capable of interrupting the flow of fluid in the auxiliary duct 10 before the fluid can reach the bypass valve 10a.

Furthermore, the auxiliary duct 10 may also comprise a second isolation gate valve **10c.**

If present, the second isolation gate valve 10c is arranged downstream of the bypass valve 10a. Thus, the second isolation gate valve 10c is substantially suitable for interrupting the flow of fluid in the auxiliary duct 10 before the fluid can return to the bypass valve 10a from, for example, the outlet duct 12.

In turn, the outlet duct 12 may comprise a third isolation gate valve **12a.** If present, the third gate valve 12a is arranged downstream of the turbine 1. Furthermore, the third isolation gate valve 12a is preferably configured to allow or obstruct the passage of fluid flow exclusively from the turbine 1. This means that the third isolation gate valve 12a does not obstruct the passage of fluid from the outlet duct 12 to the auxiliary duct 10.

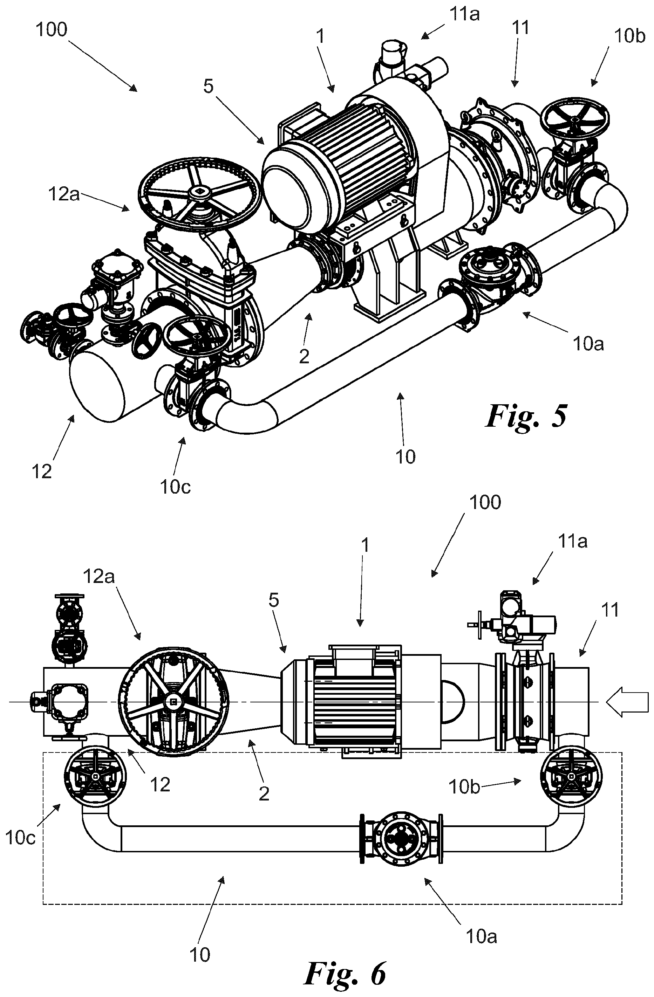

Preferably, one or more isolation gate valves 10b, 10c, 12a are of the manual type. For example, they may be conventional gate valves, as shown in Figs. 3-6, operable via an external knob. They may, in particular, allow parts of the station 100, for example the turbine 1 or the bypass valve 10a, to be isolated in order to carry out regular maintenance of the station 100.

The inlet duct 11 may also include a valve; in particular, the inlet duct 11 preferably includes a butterfly valve **11a.**

The butterfly valve 11a is preferably arranged upstream of the turbine 1. Furthermore, similarly to the third isolation gate valve 12a, the butterfly valve 11a is preferably configured to allow or obstruct the passage of fluid flow exclusively to the turbine 1, thus preferably not from the inlet duct 11 to the auxiliary duct 10.

More in detail, the butterfly valve 11a may be of the double eccentric type with an electric actuator provided with a fail-safe closing function.

The station 100 may be equipped with other valves to maintain a high degree of safety in the system.

In particular, for example, the hydraulic network 101 may comprise a vent valve. If present, the vent valve may be placed at the level of the outlet duct 12. Thus, the vent valve may be configured to allow evacuation of the fluid from the hydraulic network 101 when the flow rate exceeds a predetermined threshold value. Additionally, the hydraulic network 101 may include an overpressure valve.

If present, the overpressure valve is placed at the level of the outlet duct 12. Thus, the overpressure valve is preferably configured to allow evacuation of fluid from the hydraulic network 101 when the flow pressure exceeds a predetermined threshold value.

In conclusion, the station may also comprise control means.

If present, the control means are advantageously operatively connected to at least the blades 41 and the bypass valve 10a. Thus, the control means are configured to actuate the bypass valve 10a in proportion to a rotation of the blades 41 about the respective inclination axis 41a or vice versa.

The control means, therefore, may allow the behaviour of the station 100 to be adjusted, relative to the section defined by the auxiliary duct 10, in order to balance any pressure surges imposed by the turbine 1.

The operation of the Kaplan turbine 1 described above in structural terms is assimilable to the operation of any conventional Kaplan turbine, with the important difference of including blades 41 defining a gull-wing shape that imparts particular efficiency to the turbine compared to the ordinary one. In fact, while normal turbines achieve an average efficiency of 20-30%, turbine 1 manages to achieve efficiencies of up to 70%.

The operation of the station 100 described above in structural terms is as follows. Basically, turbine 1 and bypass valve 10a in parallel can be adjusted to regulate the flow rate and/or pressure of the fluid flowing to the end users.

Of course, the valves 10a, 11a and gate valves 10b, 10c, 12a present in the station 100 can also allow the section of turbine 1, or the auxiliary duct 10, to be bypassed, when it is necessary for maintenance or other reasons that may arise.

The pressure reduction station 100 for a hydraulic network according to the invention achieves important advantages.

In fact, the pressure reduction station 100 for a hydraulic network allows drastically reducing the formation of impulsive phenomena such as water hammers, allowing to stabilise the pressure of the fluid arriving at the users.

Therefore, the pressure reduction station 100 for a hydraulic network also allows to reduce the wear and the possibility of breakage of the pipes composing the hydraulic network.

In addition, the pressure reduction station 100 for a hydraulic network, thanks to the presence of the Kaplan turbine 1, allows to ensure continuity of supply both in pressure and flow rate, as required by the users.

Therefore, by its conformation, the pressure reduction station 100 for a hydraulic network allows for easy installation in any urban hydraulic network, defining reduced spaces compatible with urban design, and being easily connected to the national power grid.

In addition, the pressure reduction station 100 for a hydraulic network achieves low noise levels, especially thanks to the Kaplan turbine 1.

In conclusion, the pressure reduction station 100 for a hydraulic network makes maintenance considerably easier, easily allowing the isolation of various parts without involving excessive handling time or overall blockages of the hydraulic network.

Variations may be made to the invention that fall within the scope of the inventive concept defined in the claims.

In this context, all the details can be replaced by equivalent elements and any materials, shapes and dimensions can be used.

## Claims

1. Pressure reduction station (100) for a hydraulic network comprising:
- a Kaplan turbine (1) comprising:
- a tubular body (2) defining at least in part a development axis (2a) along which a flow of fluid is conveyed and including at least one inlet (20) and one outlet (21) available in fluid passage connection with a hydraulic network (101) external to said turbine (1);
- means of deflection (3) configured to deflect said fluid flow;
- a propeller (4) arranged downstream of said deflection means (3) and configured to rotate about said development axis (2a) relative to said fluid flow and including
- a shaft (40) extending along said development axis (2a), and
- a plurality of blades (41) loosely connected to said shaft (40), distributed around said development axis (2a);
- a hydraulic network (101) including:
- an inlet duct (11) in fluid passage connection with said inlet (20),
- an outlet duct (12) in fluid passage connection with said outlet (21);
- said hydraulic network (101) further comprises an auxiliary duct (10) in fluid passage connection with said inlet and outlet ducts (11, 12) parallel to said turbine (1) and including a bypass valve (10a);
and **characterised by** the fact that
- said means of deflection (3) are positioned on said body (2) and including a plurality of stator deflectors (30) distributed around said development axis (2a):
- said plurality of blades (41) are configured to rotate simultaneously around a respective inclination axis (41a) radial to said development axis (2a) to vary in flow rate and/or pressure said fluid flow determining variations of said fluid flow;
- said bypass valve (10a) is configured to be actuated proportionally to said variations of said fluid flow imposed by said turbine (1) to maintain flow rate and/or pressure surges determined by said variations of said fluid flow within predetermined limit values.

2. Station (100) according to claim 1, wherein said bypass valve (10a) is a hydro-valve or a needle valve.

3. Station (100) according to any of the previous claims, wherein said auxiliary duct (10) comprises a first isolation gate valve (10b) arranged upstream of said bypass valve (10a) and a second isolation gate valve (10c) arranged downstream of said bypass valve (10a).

4. Station (100) according to any of the previous claims, wherein said inlet duct (11) comprises a butterfly valve (11a) disposed upstream of said turbine (1) and configured to allow or obstruct the passage of said fluid flow exclusively to said turbine (1).

5. Station (100) according to the preceding claim, wherein said butterfly valve (11a) is of the double eccentric type with an electric actuator provided with a fail-safe closing function.

6. Station (100) according to any of the previous claims, wherein said outlet duct (12) comprises a third isolation gate valve (12a) arranged downstream of said turbine (1) and configured to allow or obstruct the passage of said fluid flow exclusively from said turbine (1).

7. Station (100) according to claims 3 and/or 6, wherein one or more of said isolation gate valves (10b, 10c, 12a) is of a manual type.

8. Station (100) according to any of the previous claims, wherein hydraulic network (101) comprises a vent valve disposed at said outlet duct (12) and configured to allow evacuation of said fluid from said hydraulic network (101) when the flow rate of said fluid flow exceeds a predetermined threshold value.

9. Station (100) according to any of the previous claims, wherein said hydraulic network (101) comprises an overpressure valve disposed at said outlet duct (12) and configured to allow evacuation of said fluid from said hydraulic network (101) when the pressure of said fluid flow exceeds a predetermined threshold value.

10. Station (100) according to any of the previous claims, comprising control means operatively connected at least to said blades (41) and to said bypass valve (10a) and configured to actuate said bypass valve (10a) in proportion to a rotation of said blades (41) around said respective inclination axis (41a) or vice versa.

## Patentansprüche

1. Druckreduzierstation (100) für ein hydraulisches Netzwerk, umfassend:
- eine Kaplan-Turbine (1), umfassend:
- einen rohrförmigen Körper (2), der mindestens teilweise eine Entwicklungsachse (2a) definiert, entlang der ein Fluidstrom gefördert wird, und enthaltend mindestens einen Einlass (20) und einen Auslass (21), die in Fluiddurchgangsverbindung mit einem hydraulischen Netzwerk (101) außerhalb der Turbine (1) stehen;
- Ablenkmittel (3), die dazu konfiguriert sind, den Fluidstrom abzulenken;
- einen Antrieb (4), der stromabwärts der Ablenkmittel (3) angeordnet ist und dazu konfiguriert ist, sich um die Entwicklungsachse (2a) in Bezug auf den Fluidstrom zu drehen, und umfassend
- eine Welle (40), die sich entlang der Entwicklungsachse (2a) erstreckt, und
- eine Mehrzahl von Schaufeln (41), die lose mit der Welle (40) verbunden sind und um die Entwicklungsachse (2a) verteilt sind;
- ein hydraulisches Netzwerk (101), umfassend:
- eine Einlassleitung (11), die in Fluiddurchgangsverbindung mit dem Einlass (20) steht,
- einen Auslassleitung (12), die in Fluiddurchgangsverbindung mit dem Auslass (21) steht;
- wobei das hydraulische Netzwerk (101) ferner eine Hilfsleitung (10) umfasst, die in Fluiddurchgangsverbindung mit den Einlass- und Auslassleitungen (11, 12) parallel zu der Turbine (1) steht und ein Bypassventil (10a) umfasst;
und **dadurch gekennzeichnet, dass**
- die Ablenkmittel (3) auf dem Körper (2) angeordnet sind und eine Mehrzahl von Statorablenkern (30) umfassen, die um die Entwicklungsachse (2a) verteilt sind:
- die Mehrzahl von Schaufeln (41) dazu konfiguriert ist, sich gleichzeitig um eine jeweilige Neigungsachse (41a) radial zu der Entwicklungsachse (2a) zu drehen, um den Fluidstrom in Durchfluss und/oder Druck zu ändern, indem Änderungen des Fluidstroms bestimmt werden;
- das Bypassventil (10a) dazu konfiguriert ist, proportional zu den Änderungen des Fluidstroms, die durch die Turbine (1) auferlegt werden, betätigt zu werden, um Durchfluss und/oder Druckspitzen, die durch die Änderungen des Fluidstroms bestimmt werden, innerhalb vorbestimmter Grenzwerte zu halten.

2. Station (100) nach Anspruch 1, wobei das Bypassventil (10a) ein Hydroventil oder ein Nadelventil ist.

3. Station (100) nach einem der vorhergehenden Ansprüche, wobei die Hilfsleitung (10) ein erstes Absperrschieberventil (10b), das stromaufwärts des Bypassventils (10a) angeordnet ist, und ein zweites Absperrschieberventil (10c), das stromabwärts des Bypassventils (10a) angeordnet ist, umfasst.

4. Station (100) nach einem der vorhergehenden Ansprüche, wobei die Einlassleitung (11) eine Absperrklappe (11a) umfasst, die stromaufwärts der Turbine (1) angeordnet ist und dazu konfiguriert ist, den Durchgang des Fluidstroms ausschließlich zu der Turbine (1) zu erlauben oder zu verhindern.

5. Station (100) nach dem vorhergehenden Anspruch, wobei die Absperrklappe (11a) von dem doppelt exzentrischen Typ ist und mit einem elektrischen Antrieb, der mit einer Fail-Safe-Schließfunktion versehen ist.

6. Station (100) nach einem der vorhergehenden Ansprüche, wobei die Auslassleitung (12) ein drittes Absperrschieberventil (12a) umfasst, das stromabwärts der Turbine (1) angeordnet ist und dazu konfiguriert ist, den Durchgang des genannten Fluidstroms ausschließlich von der Turbine (1) zu erlauben oder zu verhindern.

7. Station (100) nach den Ansprüchen 3 und/oder 6, wobei eines oder mehrere der Absperrschieberventile (10b, 10c, 12a) von dem manuellen Typ ist.

8. **.** Station (100) nach einem der vorhergehenden Ansprüche, wobei das hydraulische Netzwerk (101) ein Entlüftungsventil umfasst, das an der Auslassleitung (12) angeordnet ist und dazu konfiguriert ist, den Ablass des Fluids aus dem hydraulischen Netzwerk (101) zu erlauben, wenn der Durchfluss des Fluidstroms einen vorbestimmten Schwellenwert überschreitet.

9. **.** Station (100) nach einem der vorhergehenden Ansprüche, wobei das hydraulische Netzwerk (101) ein Überdruckventil umfasst, das an der Auslassleitung (12) angeordnet ist und dazu konfiguriert ist, den Ablass des Fluids aus dem hydraulischen Netzwerk (101) zu erlauben, wenn der Druck des Fluidstroms einen vorbestimmten Schwellenwert überschreitet.

10. **.** Station (100) nach einem der vorhergehenden Ansprüche, umfassend Steuermittel, die operativ mindestens mit den Schaufeln (41) und mit dem Bypassventil (10a) verbunden sind und dazu konfiguriert sind, das Bypassventil (10a) proportional zu einer Drehung der Schaufeln (41) um die jeweilige Neigungsachse (41a) oder umgekehrt zu betätigen.

## Revendications

1. Station de réduction de pression (100) pour un réseau hydraulique comprenant :
une turbine Kaplan (1) comprenant :
- un corps tubulaire (2) définissant au moins en partie un axe de développement (2a) le long duquel un flux de fluide est convoyé et incluant au moins une entrée (20) et une sortie (21) disponibles en connexion de passage de fluide avec un réseau hydraulique (101) externe à ladite turbine (1) ;
- des moyens de déflexion (3) configurés pour dévier ledit flux de fluide ;
- une hélice (4) disposée en aval desdits moyens de déflexion (3) et configurée pour tourner autour dudit axe de développement (2a) par rapport audit flux de fluide et comprenant
- un arbre (40) s'étendant le long dudit axe de développement (2a), et
- une pluralité de pales (41) reliées de manière lâche audit arbre (40), réparties autour dudit axe de développement (2a) ;
- un réseau hydraulique (101) incluant :
- un conduit d'entrée (11) en connexion de passage de fluide avec ladite entrée (20),
- un conduit de sortie (12) en connexion de passage de fluide avec ladite sortie (21) ;
- ledit réseau hydraulique (101) comprend en outre un conduit auxiliaire (10) en connexion de passage de fluide avec lesdits conduits d'entrée et de sortie (11, 12) en parallèle à ladite turbine (1) et incluant une vanne de dérivation (10a) ;
- et **caractérisé par le fait que**
- lesdits moyens de déflexion (3) sont positionnés sur ledit corps (2) et incluant une pluralité de déflecteurs statoriques (30) répartis autour dudit axe de développement (2a) :
- ladite pluralité de pales (41) est configurée pour tourner simultanément autour d'un axe d'inclinaison respectif (41a) radial audit axe de développement (2a) pour varier le débit et/ou la pression dudit flux de fluide déterminant des variations dudit flux de fluide ;
- ladite vanne de dérivation (10a) est configurée pour être actionnée proportionnellement auxdites variations dudit flux de fluide imposées par ladite turbine (1) afin de maintenir les surpressions et/ou les variations de débit déterminées par lesdites variations dudit flux de fluide dans des valeurs limites prédéterminées.

2. Station (100) selon la revendication 1, dans laquelle ladite vanne de dérivation (10a) est une hydrovanne ou une vanne à pointeau.

3. Station (100) selon l'une quelconque des revendications précédentes, dans laquelle ledit conduit auxiliaire (10) comprend une première vanne d'isolement à guillotine (10b) disposée en amont de ladite vanne de dérivation (10a) et une deuxième vanne d'isolement à guillotine (10c) disposée en aval de ladite vanne de dérivation (10a).

4. Station (100) selon l'une quelconque des revendications précédentes, dans laquelle ledit conduit d'entrée (11) comprend une vanne papillon (11a) disposée en amont de ladite turbine (1) et configurée pour permettre ou empêcher le passage dudit flux de fluide exclusivement vers ladite turbine (1).

5. Station (100) selon la revendication précédente, dans laquelle ladite vanne papillon (11a) est du type à double excentration avec un actionneur électrique pourvu d'une fonction de fermeture de sécurité.

6. Station (100) selon l'une quelconque des revendications précédentes, dans laquelle ledit conduit de sortie (12) comprend une troisième vanne d'isolement à guillotine (12a) disposée en aval de ladite turbine (1) et configurée pour permettre ou empêcher le passage dudit flux de fluide exclusivement à partir de ladite turbine (1).

7. Station (100) selon les revendications 3 et/ou 6, dans laquelle une ou plusieurs desdites vannes d'isolement à guillotine (10b, 10c, 12a) est de type manuel.

8. Station (100) selon l'une quelconque des revendications précédentes, dans laquelle le réseau hydraulique (101) comprend une vanne d'évent disposée au niveau dudit conduit de sortie (12) et configurée pour permettre l'évacuation dudit fluide dudit réseau hydraulique (101) lorsque le débit dudit flux de fluide dépasse une valeur seuil prédéterminée.

9. Station (100) selon l'une quelconque des revendications précédentes, dans laquelle ledit réseau hydraulique (101) comprend une vanne de surpression disposée au niveau dudit conduit de sortie (12) et configurée pour permettre l'évacuation dudit fluide dudit réseau hydraulique (101) lorsque la pression dudit flux de fluide dépasse une valeur seuil prédéterminée.

10. Station (100) selon l'une quelconque des revendications précédentes, comprenant des moyens de commande opérativement reliés au moins auxdites pales (41) et à ladite vanne de dérivation (10a) et configurés pour actionner ladite vanne de dérivation (10a) proportionnellement à une rotation desdites pales (41) autour dudit axe d'inclinaison respectif (41a) ou vice versa.
